# EUROPEAN PATENT SPECIFICATION

(11) **EP 1 431 019 B1**
(45) Date of publication and mention of the grant of the patent: **07.03.2007**
(21) Application number: 02425778.4
(22) Date of filing: 17.12.2002
(51) Int. Cl.: B29C 41/08, B29C 41/36, B29C 41/52, B29C 41/20

(54) **Apparatus and its use for producing porous membranes for medical use**
Vorrichtung und ihre Verwendung zur Herstellung von porösen Membranen für die medizinische Verwendung
Dispositif et son utilisation pour la fabrication de membranes poreuses pour utilisation médicale

(43) Date of publication of application: 23.06.2004
(73) Proprietor: Integrated Biomaterial & Cell Technologies S.R.L., 40128 Bologna (IT)
(72) Inventor: Soldani, Giorgio, 56100 Pisa (IT)
(74) Representative: Jorio, Paolo

(56) References cited:
- US-A- 4 474 630
- US-A- 5 387 621

## Description

The present invention relates to a machine and method for producing porous membranes for medical use.

In particular, the present invention relates to a machine and its use for producing biocompatible and heamocompatible membranes designed to constitute vascular prostheses and artificial tissues for medical use.

The prior art describes many techniques for the production, using polymers, of small-diameter porous or filamentous tubular tissues.

In addition to the now consolidated production techniques using extrusion, a spray method for producing membranes is known from document US 5,387,621, by which they are obtained, for example, from thermodynamically unstable polymeric solutions. Specifically, the unstable solution is generated with the addition of a non-solvent to a dilute polymeric solution and the membranes are obtained with spray deposition, using a single spray means, or with simultaneous but separate spray deposition of the unstable polymeric and non-solvent solution by separate spray means, on a supporting element designed to define the shape of the membrane.

The method described above allows the production, for example, of small-diameter vascular prostheses or flat membranes obtained by cutting tubular membranes with a larger diameter longitudinally.

The vascular prostheses or flat membranes, hereinafter generally referred to as porous membranes, obtained with the above-mentioned techniques, although having indisputable positive aspects, are not free of disadvantages.

The main disadvantage consists of the fact that the chemico-physical properties of the porous membranes obtained with the spray method, particularly the porosity of the membrane structure, are difficult to control.

Generally speaking, with the known methods, it is difficult to obtain membranes able to simultaneously fulfil haemocompatibility and biocompatibility requirements and provide adequate mechanical strength.

Therefore, the aim of the present invention is to provide a machine for producing porous membranes which are free of the above-mentioned disadvantage and, at the same time, are practical for use and simple and economical to produce.

Accordingly the present invention provides a machine for producing porous membranes for medical use as described in claim 1.

Another aim of the present invention is to provide a method for producing membranes for medical use, in particular tubular membranes, which can be used as prostheses, especially vascular prostheses, and more specifically small-diameter vascular prostheses, the method being simple and flexible to implement.

Accordingly the present invention also uses the machine of claim 1 for producing porous membranes for medical use as described in claim 14.

The technical features of the present invention, in accordance with the above-mentioned aims, are set out in the claims herein and the advantages more clearly illustrated in the detailed description which follows, with reference to the accompanying drawings, which illustrate a preferred embodiment of the invention without limiting the scope of the inventive concept, and in which:
- Figure 1 is a schematic illustration of a preferred embodiment of a machine for producing porous membranes, made in accordance with the present invention;
- Figure 2 is a top perspective view of a machine for producing membranes, made in accordance with the present invention;
- Figures 3, 4, 5 and 6 are front elevation views of a portion of the machine illustrated in Figure 2 in as many different operating configurations;
- Figures 7, 8 and 9 are top plan views of a portion of the machine illustrated in Figures 1 and 2 in as many different operating configurations;
- Figure 10 is an enlarged cross-section of the detail P illustrated in Figure 3.

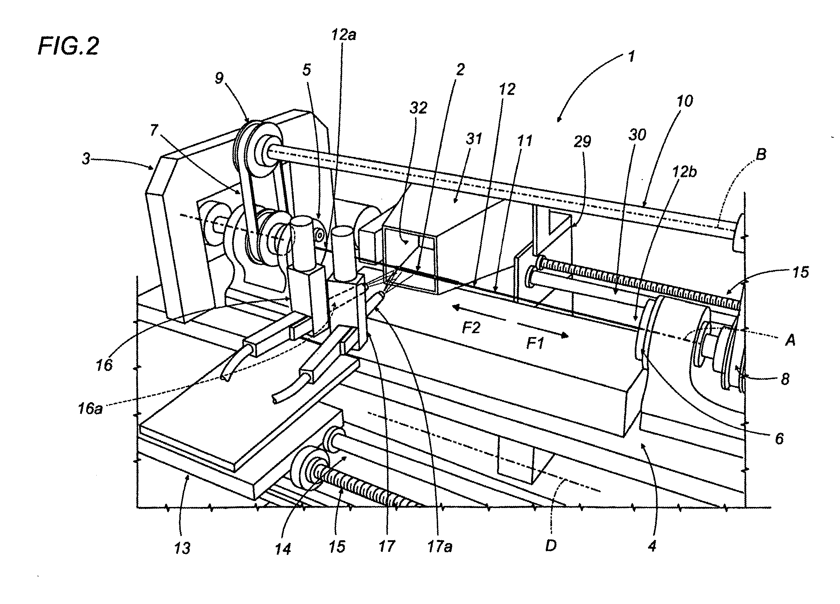

With reference to Figure 2, the numeral 1 indicates as a whole a portion of a machine for producing porous membranes 2 made in accordance with the present invention.

The machine 1 comprises a frame 3 and a central body 4 extending longitudinally in a direction D.

The central body 4 has a first and a second spindle 5, 6 which are coaxial with one another, driven in synchronised rotation about an axis A parallel with the direction D, by respective toothed belts 7, 8.

The toothed belts 7, 8 are in turn driven by toothed pulleys, of which Figure 2 fully illustrates only one, labelled 9, keyed to opposite ends of a shaft 10. The shaft 10 is turned by drive means of the known type which are not illustrated or described in any further detail.

The shaft 10 has an axis of rotation B parallel with the above-mentioned axis A of the spindles 5, 6.

Each spindle 5, 6 supports one end of a supporting element 11. In Figure 2 the supporting element 11 consists of a cylindrical body 12 with a small diameter.

At the side of the central body 4, the machine 1 comprises a first carriage 13 which slides longitudinally in the direction D, on guide parts 14. A threaded rod 15 engages as it turns with the carriage 13, to drive the carriage in the direction D. The threaded rod 15 is turned by drive means of the known type and not illustrated.

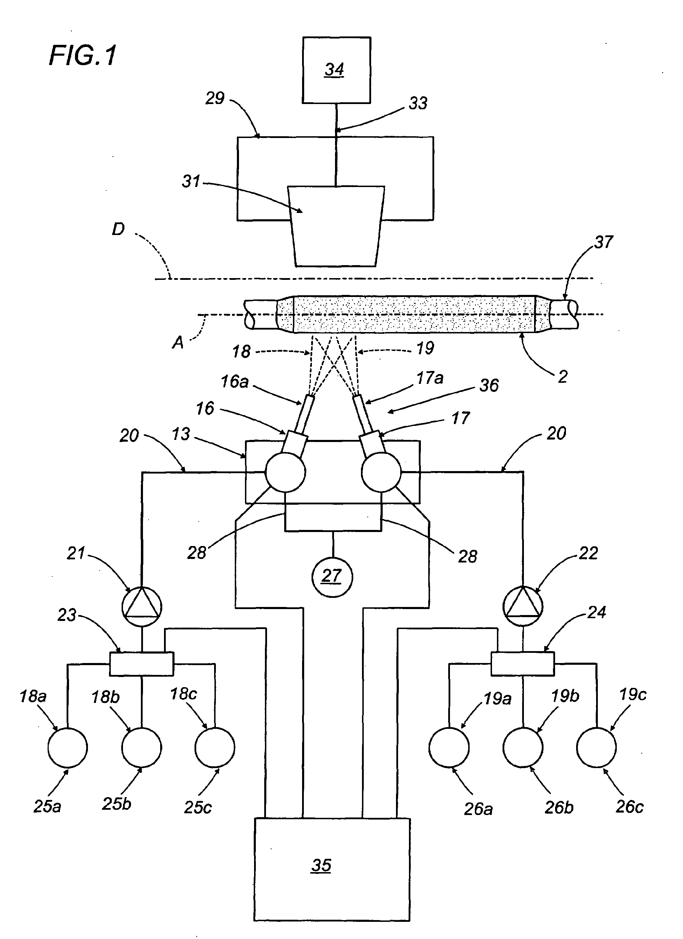

With reference to Figures 1 and 2, the first carriage 13 comprises first and second guns 16, 17 with nozzles 16a, 17a designed to spray fluid substances, respectively consisting of first and second mixtures 18, 19.

The mixtures 18 and 19 are supplied to the guns 16, 17 through pipes 20 by pumps 21, 22.

The mixtures 18, 19 are formed at and by mixer parts 23, 24 to which a plurality of stored reserves of components designed to form the above-mentioned mixtures 18, 19 are fluidly connected.

In particular, for example Figure 1 illustrates three reserves 25a, 25b, 25c of components 18a, 18b, 18c for the first mixture 18 and three reserves 26a, 26b, 26c of components 19a, 19b, 19c for the second mixture 19.

The machine 1 also comprises a source 27 of pressurised gas supplied to the guns 16, 17 by pipes 28 to activate the nozzles 16a, 17a for spray emission of the mixtures 18, 19.

The nozzles 16a, 17a of the two guns 16, 17 are angled in such a way that they substantially converge on the same point of the cylindrical body 12.

With reference to Figure 2, on the side of the cylindrical body 12 opposite the first carriage 13, the machine 1 comprises a second carriage 29 which also slides longitudinally in the direction D on respective guide parts 30 and is driven by a threaded rod 15.

The second carriage 29 is covered by an extractor hood 31, one of whose intakes 32 is positioned over the guns 16, 17.

As shown in Figure 1, the hood 31 is connected, by a manifold schematically illustrated with a line 33, to a suction source, also schematically illustrated with a block 34.

Again with reference to Figure 1, the machine 1 also comprises a central control unit 35 designed to act on the above-mentioned mixer parts 23, 24 as well as the guns 16, 17 and on the drive means of the spindles 5, 6 and carriages 13, 29.

The guns 16, 17, together with the nozzles 16a, 17a, the source 27 of pressurised gas and the pumps 21, 22 as a whole define, for the machine 1, means 36 for spraying the mixtures 18,19.

In practice, as illustrated in Figure 2, the cylindrical body 12 is mounted on the central body 4 of the machine 1, with its ends 12a, 12b fixed to the respective spindles 5, 6.

Through the above-mentioned drive means, which are not illustrated, by means of the shaft 10 and belts 7, 8, the cylindrical body 12 which forms the supporting element 11 is turned about its axis A.

Starting with a first limit position of the first carriage 13, illustrated in Figure 2, the first nozzle 16a is activated by a flow of pressurised gas from the source 27 through the pipe 28. The pressurised gas, in accordance with known methods which are not described in any further detail, causes the spray emission of the first mixture 18 from the nozzle 16a, creating a first jet 16b. The first mixture is supplied to the nozzle 16a by the first pump 21 through the pipe 20.

The first pump 21 sends the first mixture 18 to the first nozzle 16a, drawing it from the first mixer 23 to which the three reserves 25a, 25b, 25c of the components 18a, 18b, 18c are connected.

Similarly to the above description with reference to the first nozzle 16a, and substantially simultaneously with this, the second nozzle 17a is also activated by a flow of pressurised gas from the source 27, through the pipe 28. The pressurised gas causes the spray emission of the second mixture 19 from the nozzle 17a, creating a second jet 17b. The second mixture 19 is supplied to the nozzle 17a by the second pump 22 through the pipe 20.

The second pump 22 sends the second mixture 19 to the second nozzle 17a, picking it up from the second mixer 24, to which the three reserves 26a, 26b, 26c of the components 19a, 19b, 19c are connected.

Again starting from the limit position illustrated in Figure 2, the first carriage 13 begins to move, driven by the rotation of the threaded rod 15 which as it turns engages with the carriage 13, in the direction D, as indicated by the arrow F1. At the same time, the cylindrical body 12 which constitutes the supporting element 11 is turned by the spindles 5, 6 about the axis A.

Similarly to the above description, the second carriage 29 begins to move, in the direction D as indicated by the arrow F1, driven by the rotation of the threaded rod 15 which as it turns engages with the carriage 29.

The extractor hood 31, integral with the second carriage 29 also moves in the direction D as indicated by the arrow F1, substantially synchronised with the first carriage 13 and remains over the nozzles 16a, 17a. The extractor action of the hood 31 is mainly intended to promote the regular emission of the jets 16b, 17b of the mixtures 18, 19 directed onto the supporting element 11.

The above-mentioned movements, simultaneously with the spraying action of the nozzles 16a, 17a, allows the fluid substances consisting of the mixtures 18, 19 to be deposited on the supporting element 11, the latter therefore constituting an element 37 on which the fluid substances are deposited and build up.

While the supporting element 11 carries on rotating about its own axis A continuously, the movement of the carriages in the direction D continues with an alternating motion. That is to say, when a second, opposite limit position, not illustrated and defined by the desired longitudinal dimensions for the membrane 2 being formed is reached, the direction of carriage 13, 29 movement is inverted and the movement continues in the direction indicated by the arrow F2.

The repetition in succession of numerous cycles of alternating carriage 13, 29 movement allows a given amount of the mixtures 18, 19 to be deposited, said amount designed to form the body of the membrane 2. In other words, according to the desired thickness of the membrane 2 and considering the mixture fluid flow rate of nozzles 16b, 17b, the number of alternating motion feed cycles for the carriages 13, 29 is established.

A first set of such feed cycles is performed by the machine 1 with the mixtures 18, 19 having respective first compositions given by particular relative quantities for mixing of the components 18a, 18b, 18c, 19a, 19b, 19c stored in the reserves 25a, 25b, 25c, 26a, 26b, 26c.

The values required of these first compositions are set on the central control unit 35 which operates directly on the mixer parts 23, 24 in order to make up the first compositions.

As illustrated in Figure 10, the mixtures 18, 19 in their first configurations form a first layer 38 of the porous membrane 2, this first layer 38 having predetermined chemico-physical properties.

When executing the commands set on it, the central control unit 35 therefore acts on the mixer parts 23, 24 to change the relative quantities of the components 18a, 18b, 18c, 19a, 19b, 19c stored in the reserves 25a, 25b, 25c, 26a, 26b, 26c and to create the second compositions of the mixtures 18, 19.

The machine 1 performs a second set of cycles with the mixtures 18, 19 with the second compositions.

As they are deposited on the first layer 38, the mixtures 18 and 19, in their second compositions, create a second layer 39 of the porous membrane 2, this second layer 39 having predetermined chemico-physical properties which are different to those of the first layer 38 below it.

In particular, as illustrated in Figure 10, these chemico-physical properties include the porosity of the membrane 2 which, for example with reference to tubular membranes for vascular prostheses, advantageously involves two different layers, the first, internal layer 38 in contact with the haematic fluid and more porous, and the second, external layer 39, more compact and with greater mechanical strength.

Advantageously, the mixers 23, 24, not illustrated in detail, are of the solenoid valve type, programmable and allow sequential valve opening so that the nozzles 16a, 17a can be supplied with predetermined quantities of the components 18a, 18b, 18c in the reserves 25a, 25b, 25c and, at the same time, the components 19a, 19b, 19c in the reserves 26a, 26b, 26c.

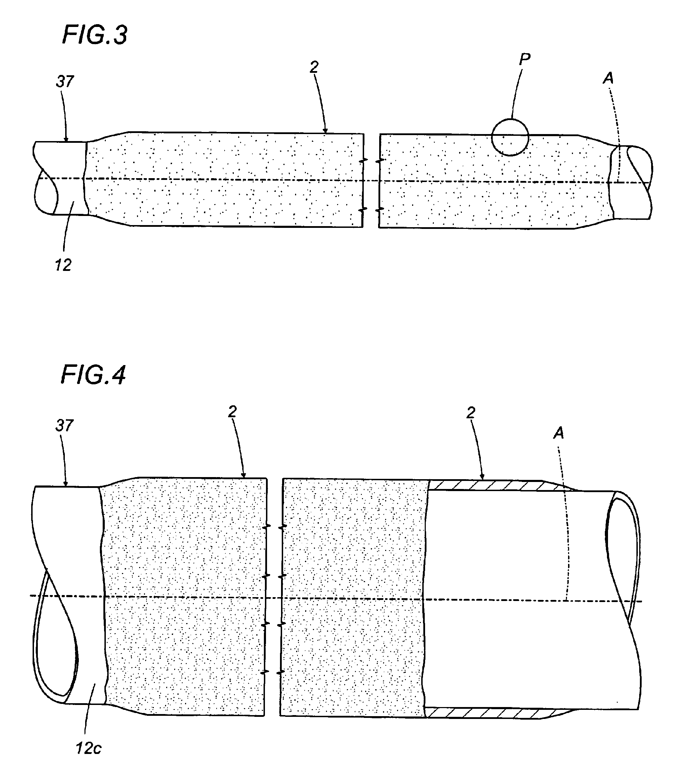

As illustrated in Figure 3, the element 37 on which the substances are deposited and build up is the cylindrical body 12 described above with reference to Figure 2, designed for producing tubular porous membranes 2 suitable for use as vascular prostheses even with very small diameters. The ends of the cylindrical body 12, not illustrated, are connected to the machine 1 spindles 5, 6 to turn about its axis A.

With reference to Figure 4, the element 37 on which the substances are deposited and build up consists of a cylindrical drum 12c with a diameter larger than that of the above-mentioned cylindrical body 12. Use of the drum 12c as an element 37 on which the substances are deposited and build up is intended to produce flat porous membranes obtained by cutting tubular membranes 2 produced with the above-mentioned method longitudinally.

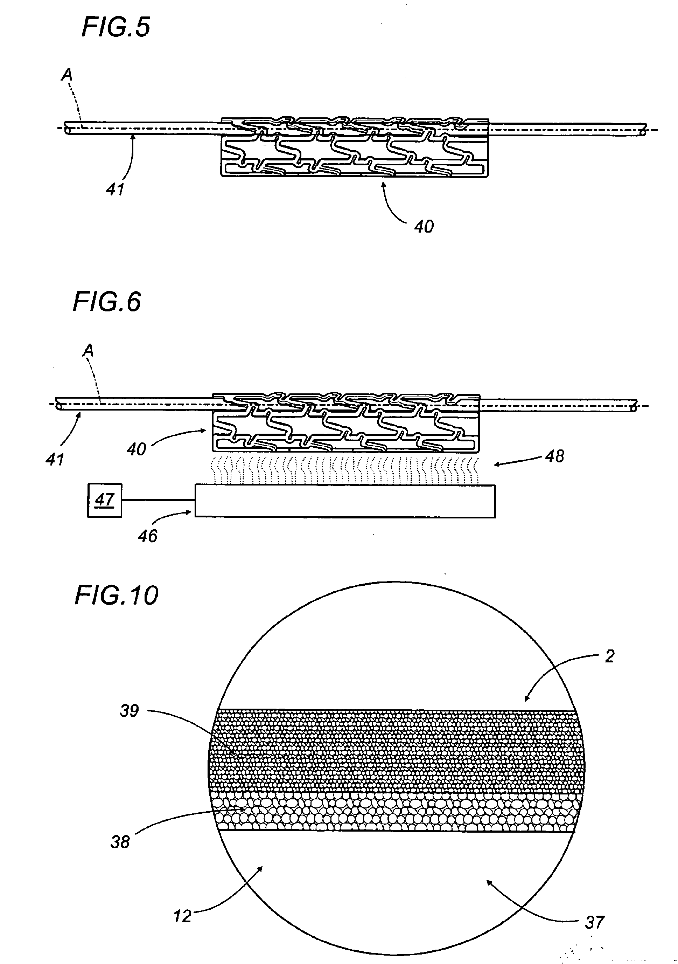

With reference to Figure 5, the element 37 on which the sprayed fluid substances are deposited and build up consists of a stent 40. The stent 40 is a tubular element, made of metal or plastic for insertion, for example, in a blood vessel to hold it open and prevent constriction or pressure from the outside. The stent 40 is supported by a fine supporting wire 41, advantageously made of polytetrafluoroethylene, which passes inside it and whose opposite ends, not illustrated in the drawing, are connected to the machine 1 spindles 5, 6 to turn about its axis A. As it turns about the axis A, the wire 41 causes the stent 40 to rotate.

During normal machine 1 operation, the stent 40 is hit by one or both of the jets 16b, 17b from the nozzles 16, 17 and, by means of the above-mentioned technique, a dense membrane 2 is formed on its surface, where the term dense refers to a membrane 2 whose porosity is very low, that is to say, which is substantially closed and impermeable. Since stents are tubular elements with gaps in the surface, the fluid substances sprayed can advantageously be deposited evenly on both the outer surface and in the inner tubular face, passing through the gaps in the outer surface.

Figure 6 illustrates a preferred embodiment of the configuration illustrated in Figure 5. In this improved configuration, the machine 1 comprises a heating element 46, schematically illustrated in the drawing. This element 46 is located below the stent 40 which is mounted on the supporting wire 41. The heating element 46 is regulated by a temperature control unit 47 and powered by known means, not illustrated or described in further detail, for heating a zone 48 close to the stent 40.

Advantageously, thanks to the heat, when the particles of fluid substances sprayed by the nozzles 16a, 17a make contact with the stent 40, they form a substantially smooth and even layer on its surface. Moreover, the higher temperature created in the zone 48 by the presence of the heating element 46 allows the solvents present in the fluids sprayed to rapidly evaporate, increasing adhesion to the stent 40 by the membrane 2 as it is formed.

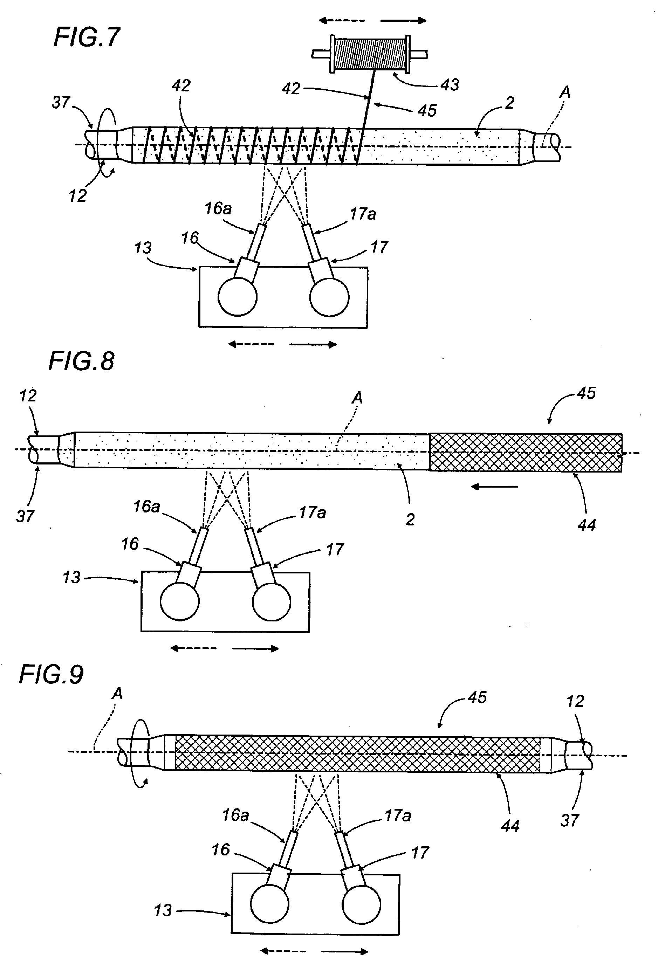

Figure 7 illustrates an alternative embodiment of the machine 1 disclosed. This alternative embodiment allows the above-mentioned procedure for spray depositing the fluid substances to be performed at the same time as a filament 42 of a suitable strengthening material (polyester, polyurethane, silicone, etc.) is wound around the supporting element 11. In particular, the filament 42 is incorporated in the porous membrane 2 being formed on the rotating cylindrical body 12. The filament 42 is wound in a spiral, with a predetermined pitch, by the respective movements of the rotating support 12 and of a rotary dispenser element 43 for the filament 42. The element 43 can slide in the direction D, driven by drive means which are not illustrated.

Figures 8 and 9 illustrate yet another embodiment of the machine 1 disclosed. In this embodiment, once the nozzles 16 and 17 have deposited a predetermined quantity of the fluid substances on the cylindrical body 12, providing a given porous membrane 2 thickness, a tubular strengthening mesh 44 is inserted on the cylindrical body 12. The mesh 44, advantageously made of polyester, is then covered with another material, which may or may not be porous, again deposited with the spray technique described above. Advantageously, the tubular mesh 44 has substantially wide links, allowing substantial continuity between the material spray-deposited before insertion of the mesh 44 and that deposited over the mesh 44.

Therefore, the mesh 44 is incorporated between two polymeric layers.

Where special needs require it, the tubular mesh 44 can also only be coated on its outer wall, by inserting the mesh 44 directly on the cylindrical body 12 without previously spray-depositing any material on the body 12, as described above.

The strengthening filament 42 and the tubular mesh 44 together constitute membrane 2 stiffening elements 45.

The operations described above with reference to Figures 7, 8 and 9 may also be performed with large deposit and build up elements 37, such as the cylindrical drum 12c, to obtain strengthened flat porous membranes 2.

Advantageously, depending on the required membrane 2 composition, the control unit 35 acts upon the mixer parts 23, 24, altering the relative quantities of components 18a, 18b, 18c, 19a, 19b, 19c, for example, in a substantially instantaneous way, with a stepped function, or continuously with a gradual function.

Advantageously, but without limiting the scope of the present invention, in a preferred embodiment of the present invention the first mixture 18 comprises a polymer and the second mixture 19 comprises a non-solvent for the polymer.

The invention described can be subject to modifications and variations without thereby departing from the scope of the inventive concept as defined in the appended claims.

## Claims

1. A machine for producing porous membranes (2) for medical use, starting with fluid substances consisting of mixtures (18, 19) of two or more components (18a, 18b, 18c, 19a, 19b, 19c), comprising:
- spray means (36) for the fluid substances presenting at least a first nozzle (16a) and a second nozzle (17a);
- at least one source (27) of pressurised gas for activating the first nozzle (16a) and the second nozzle (17a) for spraying a first mixture (18) and a second mixture (19);
- a support (11) constituting an element (37) on which the fluid substances sprayed by the means (36) are deposited and build up, the element (37) and the spray means (36) being mobile relative to one another for substantially even distribution of the fluid substances designed to form the membrane (2), the machine being **characterised in that** it comprises reserves (25a, 25b, 25c, 26a, 26b, 26c) of said components (18a, 18b, 18c, 19a, 19b, 19c) connected to said spray means and, upstream of the spray means (36), mixer means (23, 24) for mixing together the components (18a, 18b, 18c, 19a, 19b, 19c) which form the fluid substances, in the desired relative mixing quantities, these relative quantities providing the membrane (2) with given chemico-physical properties.

2. The machine according to claim 1, **characterised in that** it comprises a central control unit (35) designed to act upon the mixer means (23, 24) to alter the relative quantities for mixture of the components (18a, 18b, 18c, 19a, 19b, 19c) of the fluid substances, according to the desired values set on the control unit (35).

3. The machine according to claim 1, **characterised in that** it comprises at least one pump (21, 22) for supplying the fluid substances to the nozzles (16a, 17a).

4. The machine according to any of the foregoing claims from 1 to 3, **characterised in that** the support (11) comprises a cylindrical element (12, 12c) for producing tubular porous membranes (2), the cylindrical element (12, 12c) being designed to turn about an axis of rotation (A).

5. The machine according to any of the foregoing claims from 1 to 3, **characterised in that** the element (37) on which the fluid substances sprayed are deposited and build up is a stent (40) designed to be covered by the substances, the stent (40) being supported by the machine using a wire (41) passing inside it and made to rotate about an axis of rotation (A).

6. The machine according to claim 5, **characterised in that** it comprises a heating element (46) designed to heat a given zone (48) close to the stent (40).

7. The machine according to claim 4, **characterised in that** the spray means (36) comprise a first carriage (13) supporting the nozzles (16a, 17a), the first carriage (13) and the cylindrical element (12, 12c) being mobile relative to one another in a direction (D) substantially parallel with the axis of rotation (A) of the cylindrical element (12, 12c).

8. The machine according to claim 7, **characterised in that** the first carriage (13) is driven by drive means so that it slides in the direction (D) substantially parallel with the axis of rotation (A) of the cylindrical element (12, 12c).

9. The machine according to any of the foregoing claims from **4** to 8, **characterised in that** it comprises a second carriage (29) supporting an extractor hood (31), the second carriage (29) sliding in the direction (D) substantially parallel with the axis of rotation (A) and the extractor hood (31) being positioned over the nozzles (16a, 17a).

10. The machine according to any of the foregoing claims from 1 to 9, **characterised in that** one of the mixtures (18, 19) comprises a polymer and the other mixture (18, 19) comprises a non-solvent for the polymer.

11. The machine according to any of the foregoing claims from 1 to 10, **characterised in that** it comprises means (43) for the insertion of membrane (2) stiffening elements (45) during membrane (2) formation.

12. The machine according to claim 11, **characterised in that** the stiffening elements (45) comprise a filament (42) designed for insertion in the membrane (2).

13. The machine according to claim 11, **characterised in that** the stiffening elements (45) comprise a tubular mesh (44) designed for insertion in the membrane (2).

14. Use of the machine according to any of the foregoing claims from 1 to 13 for producing porous membranes (2) for medical use starting with fluid substances consisting of mixtures (18, 19) of two or more components (18a, 18b, 18c, 19a, 19b, 19c), comprising the steps of:
- supplying the fluid substances to spray means (36),
- supplying a pressurized gas to a first nozzle (16a) and a second nozzle (17a) for spraying a first mixture (18) and a second mixture (19);
- depositing and building up the fluid substances sprayed by the spray means (36) on a supporting means (11),
- providing drive means for the spray means (36) and the supporting means (11) for substantially even distribution of the substances designed to form the membrane (2), the method being **characterised in that**, relative to the supply step, it comprises the step of changing the relative quantities for mixture of the components (18a, 18b, 18c, 19a, 19b, 19c), according to the desired values, relative to the chemico-physical properties required of the membrane (2).

15. The **use** according to claim 14, **characterised in that** the step of changing the relative quantities for mixture of the components (18a, 18b, 18c, 19a, 19b, 19c) occurs substantially instantaneously according to a stepped function.

16. The **use** according to claim 14, **characterised in that** the step of changing the relative quantities for mixture of the components (18a, 18b, 18c, 19a, 19b, 19c) occurs continuously according to a gradual function.

17. The **use** according to any of the foregoing claims from 14 to 16, **characterised in that** the chemico-physical properties comprise the level of porosity of the membrane (2).

18. The **use** according to any of the foregoing claims from 14 to 17, **characterised in that** it comprises the step of inserting stiffening elements (45) in the membrane (2) during membrane (2) formation.

19. The **use** according to any of the foregoing claims from 14 to 17, **characterised in that** it comprises the step of heating a zone (48) close to a support (11) forming an element (37) on which the fluid substances sprayed are deposited and build up.

## Patentansprüche

1. Maschine für die Herstellung poröser Membranen (2) für medizinische Zwecke ausgehend von flüssigen Substanzen, die aus Mischungen (18, 19) von zwei oder mehr Komponenten (18a, 18b, 18c, 19a, 19b, 19c) bestehen, umfassend:
- Sprühmittel (36) für die flüssigen Substanzen mit mindestens einer ersten Düse (16a) und einer zweiten Düse (17a);
- mindestens eine Quelle (27) mit Gas unter Druck zur Aktivierung der ersten Düse (16a) und der zweiten Düse (17a) zum Sprühen einer ersten Mischung (18) und einer zweiten Mischung (19);
- einen Träger (11), der ein Element (37) bildet, auf welches die flüssigen Substanzen, die durch die Mittel (36) gesprüht werden, abgelagert werden und sich aufbauen, wobei das Element (37) und die Sprühmittel (36) relativ zueinander für eine im Wesentlichen gleichmäßige Verteilung der flüssigen Substanzen, die bestimmt sind die Membran (2) zu bilden, beweglich sind, wobei die Maschine **dadurch gekennzeichnet ist, dass** sie Vorräte (25a, 25b, 25c, 26a, 26b, 26c) der genannten Komponenten (18a, 18b, 18c, 19a, 19b, 19c) enthält, die mit den Sprühmitteln verbunden sind, sowie stromaufwärts der Sprühmittel (36), Mischmittel (23, 24) zum Zusammenmischen der Komponenten (18a, 18b, 18c, 19a, 19b, 19c) enthält, die die flüssigen Substanzen in den gewünschten relativen Mischmengen bilden, wobei diese relativen Mengen die Membran (2) mit gegebenen chemisch physikalischen Eigenschaften liefern.

2. Maschine gemäß Anspruch 1, **dadurch gekennzeichnet, dass** sie eine zentrale Steuereinheit (35) umfasst, die bestimmt ist auf die Mischmittel (23, 24) zu wirken, um die relativen Mengen für die Mischungskomponenten (18a, 18b, 18c, 19a, 19b, 19c) der flüssigen Substanzen gemäß den an der Steuereinheit (35) eingestellten gewünschten Werten, abzuändern.

3. Maschine gemäß Anspruch 1, **dadurch gekennzeichnet, dass** sie zumindest eine Pumpe (21, 22) umfasst, um die flüssigen Substanzen zu den Düsen (16a, 17a) zu fördern.

4. Maschine gemäß irgendeinem der vorhergehenden Ansprüche 1 bis 3, **dadurch gekennzeichnet, dass** der Träger (11) ein zylindrisches Element (12, 12c) für die Herstellung rohrförmiger poröser Membranen (2) enthält, wobei das zylindrische Element (12, 12c) bestimmt ist, um sich um eine Drehachse (A) zu drehen.

5. Maschine gemäß irgendeinem der vorhergehenden Ansprüche 1 bis 3, **dadurch gekennzeichnet, dass** das Element (37), auf welchem sich die gesprühten flüssigen Substanzen ablagern und aufbauen, ein Stent (40) ist, der bestimmt ist durch die Substanzen bedeckt zu werden, wobei der Stent (40) durch die Maschine unter Verwendung eines Drahtes (41) getragen wird, der in ihn hineingeht, und in Drehung um eine Drehachse (A) versetzt wird.

6. Maschine gemäß Anspruch 5, **dadurch gekennzeichnet, dass** sie ein Heizelement (46) umfasst, das bestimmt ist, um eine gegebene Zone (48) nahe dem Stent (40) zu erwärmen.

7. Maschine gemäß Anspruch 4, **dadurch gekennzeichnet, dass** die Sprühmittel (36) einen ersten Wagen (13), der die Düsen (16a, 17a) trägt, umfasst, wobei der erste Wagen (13) und das zylindrische Element (12, 12c) relativ zueinander in eine Richtung (D), die im Wesentlichen parallel zur Drehachse (A) des zylindrischen Elements (12, 12c) ist, beweglich sind.

8. Maschine gemäß Anspruch 7, **dadurch gekennzeichnet, dass** der erste Wagen (13) durch Antriebsmittel angetrieben ist, sodass er in der Richtung (D) im Wesentlichen parallel zur Drehachse (A) des zylindrischen Elements (12, 12c) verfahren wird.

9. Maschine gemäß irgendeinem der vorhergehenden Ansprüche 4 bis 8, **dadurch gekennzeichnet, dass** sie einen zweiten Wagen (29), der eine Abzugshaube (31) trägt, umfasst, wobei der zweite Wagen (29) in die Richtung (D) im Wesentlichen parallel zu Drehachse (A) gleitet und die Abzugshaube (31) Ober den Düsen (16a, 17a) angeordnet ist.

10. Maschine gemäß irgendeinem der vorhergehenden Ansprüche 1 bis 9, **dadurch gekennzeichnet, dass** eine der Mischungen (18, 19) ein Polymer und die andere Mischung (18, 19) ein nichtaktives Lösungsmittel für das Polymer ist.

11. Maschine gemäß irgendeinem der vorhergehenden Ansprüche 1 bis 10, **dadurch gekennzeichnet, dass** sie Mitteln (43) für die Einbringung von Versteifungselementen (45) der Membran (2) während der Ausbildung der Membran (2), umfasst.

12. Maschine gemäß Anspruch 11, **dadurch gekennzeichnet, dass** die Versteifungselemente (45) einen Draht (42) umfassen, der für die Einbringung in die Membran (2) bestimmt ist.

13. Maschine gemäß Anspruch 11, **dadurch gekennzeichnet, dass** die Versteifungselemente (45) ein rohrförmiges Netz (44) umfassen, das für die Einbringung in die Membran (2) bestimmt ist.

14. Verwendung der Maschine gemäß irgendeinem der vorhergehenden Ansprüche 1 bis 13 zur Herstellung poröser Membranen (2) für medizinische Zwecke, ausgehend von flüssigen Substanzen, die aus Mischungen (18, 19) von zwei oder mehr Komponenten (18a, 18b, 18c, 19a, 19b, 19c) bestehen, umfassend die Schritte:
- Fördern der flüssigen Substanzen zu Sprühmitteln (36),
- Fördern eines Gases unter Druck zu einer ersten Düse (16a) und einer zweiten Düse (17a) zum Versprühen einer ersten Mischung (18) und einer zweiten Mischung (19);
- Ablagern und Aufbauen der durch die Sprühmitteln (36) gesprühten flüssigen Substanzen auf ein Trägermittel (11),
- Vorsehen von Antriebsmitteln für die Sprühmittel (36) und die Trägermittel (11) für eine im Wesentlichen gleichmäßige Verteilung der Substanzen, die bestimmt sind, die Membran (2) zu bilden, wobei das Verfahren **dadurch gekennzeichnet ist, dass** es in Bezug auf den Förderschritt, den Schritt der Änderung der relativen Mengen für die Mischungskomponenten (18a, 18b, 18c, 19a, 19b, 19c) gemäß den gewünschten Werten, in Hinblick auf die erforderlichen chemisch physikalischen Eigenschaften der Membran (2), enthält.

15. Verwendung gemäß Anspruch 14, **dadurch gekennzeichnet, dass** der Schritt der Änderung der relativen Mengen für die Mischungskomponenten (18a, 18b, 18c, 19a, 19b, 19c) im Wesentlichen unmittelbar gemäß einer gestuften Funktion stattfindet.

16. Verwendung gemäß Anspruch 14, **dadurch gekennzeichnet, dass** der Schritt der Änderung der relativen Mengen für die Mischungskomponenten (18a, 18b, 18c, 19a, 19b, 19c) kontinuierlich gemäß einer graduellen Funktion stattfindet.

17. Verwendung gemäß irgendeinem der vorhergehenden Ansprüche 14 bis 16, **dadurch gekennzeichnet, dass** die chemisch physikalischen Eigenschaften das Porositätsgrad der Membran (2) umfassen.

18. Verwendung gemäß irgendeinem der vorhergehenden Ansprüche 14 bis 17, **dadurch gekennzeichnet, dass** sie den Schritt der Einbringung von Versteifungselementen (45) in die Membran (2), während der Ausbildung der Membran (2), umfasst.

19. Verwendung gemäß irgendeinem der vorhergehenden Ansprüche 14 bis 17, **dadurch gekennzeichnet, dass** sie den Schritt der Erwärmung einer Zone (48) nahe einem Träger (11), der ein Element (37) bildet, auf welchem die gesprühten flüssigen Substanzen sich ablagern und aufbauen, umfasst.

## Revendications

1. Machine pour la fabrication de membranes poreuses (2) à usage médical, en commençant avec des substances fluides composées de mélanges (18, 19) de deux ou plusieurs composants (18a, 18b, 18c, 19a, 19b, 19c), comprenant :
- des moyens de pulvérisation (36) pour les substances fluides, présentant au moins une première tuyère (16a) et une seconde tuyère (17a) ;
- au moins une source (27) de gaz sous pression pour activer la première tuyère (16a) et la seconde tuyère (17a) pour pulvériser un premier mélange (18) et un second mélange (19) ;
- un support (11) formant un élément (37) sur lequel sont déposées et s'accumulent les substances fluides pulvérisées par les moyens (36), l'élément (37) et les moyens de pulvérisation (36) étant mobiles l'un par rapport aux autres pour une distribution sensiblement uniforme des substances fluides destinées à former la membrane (2), la machine étant **caractérisée en ce qu'**elle comprend des réserves (25a, 25b, 25c, 26a, 26b, 26c) desdits composants (18a, 18b, 18c, 19a,19b, 19c) reliées auxdits moyens de pulvérisation et, en amont des moyens de pulvérisation (36), des moyens mélangeurs (23, 24) pour mélanger ensemble les composants (18a, 18b, 18c, 19a, 19b, 19c) qui forment les substances fluides, dans les quantités relatives de mélange souhaitées, ces quantités relatives formant la membrane (2) avec des propriétés physico-chimiques données.

2. Machine selon la revendication 1, **caractérisée en ce qu'**elle comprend une unité de commande centrale (35) conçue pour agir sur les moyens mélangeurs (23, 24) pour modifier les quantités relatives pour le mélange des composants (18a, 18b, 18c, 19a, 19b, 19c) des substances fluides, selon les valeurs souhaitées réglées sur l'unité de commande (35).

3. Machine selon la revendication 1, **caractérisée en ce qu'**elle comprend au moins une pompe (21, 22) destinée à fournir les substances fluides aux tuyères (16a, 17a).

4. Machine selon l'une quelconque des revendications 1 à 3, **caractérisée en ce que** le support (11) comprend un élément cylindrique (12, 12c) destiné à produire des membranes poreuses tubulaires (2), l'élément cylindrique (12, 12c) étant conçu pour tourner autour d'un axe de rotation (A).

5. Machine selon l'une quelconque des revendications 1 à 3, **caractérisée en ce que** l'élément (37) sur lequel sont déposées et s'accumulent les substances fluides pulvérisées est un stent (endoprothèse vasculaire) (40) conçu pour être recouvert par les substances, le stent (40) étant supporté par la machine à l'aide d'un fil (41) passant à l'intérieur de lui et amené à se mettre en rotation autour d'un axe de rotation (A).

6. Machine selon la revendication 5, **caractérisée en ce qu'**elle comprend un élément chauffant (46) conçu pour chauffer une zone donnée (48) à proximité du stent (40).

7. Machine selon la revendication 4, **caractérisée en ce que** les moyens de pulvérisation (36) comprennent un premier chariot (13) supportant les tuyères (16a, 17a), le premier chariot (13) et l'élément cylindrique (12, 12c) étant mobiles l'un par rapport à l'autre dans une direction (D) sensiblement parallèle à l'axe de rotation (A) de l'élément cylindrique (12, 12c).

8. Machine selon la revendication 7, **caractérisée en ce que** le premier chariot (13) est entraîné par des moyens d'entraînement de sorte qu'il coulisse dans la direction (D) sensiblement parallèle à l'axe de rotation (A) de l'élément cylindrique (12, 12c).

9. Machine selon l'une quelconque des revendications 4 à 8, **caractérisée en ce qu'**elle comprend un second chariot (29) supportant un capot extracteur (31), le second chariot (29) coulissant dans la direction (D) sensiblement parallèle à l'axe de rotation (A) et le capot extracteur (31) étant positionné au-dessus des tuyères (16a, 17a).

10. Machine selon l'une quelconque des revendications 1 à 9, **caractérisée en ce qu'**un des mélanges (18, 19) comprend un polymère et l'autre mélange (18, 19) comprend un non-solvant pour le polymère.

11. Machine selon l'une quelconque des revendications 1 à 10, **caractérisée en ce qu'**elle comprend des moyens (43) pour l'insertion d'éléments de renforcement (45) de la membrane (2) au cours de la formation de la membrane (2).

12. Machine selon la revendication 11, **caractérisée en ce que** les éléments de renforcement (45) comprennent un filament (42) conçu pour l'insertion dans la membrane (2).

13. Machine selon la revendication 11, **caractérisée en ce que** les éléments de renforcement (45) comprennent une maille tubulaire (44) conçue pour l'insertion dans la membrane (2).

14. Utilisation de la machine selon l'une quelconque des revendications 1 à 13 pour la fabrication de membranes poreuses (2) à usage médical en commençant avec des substances fluides composées de mélanges (18, 19) de deux ou plusieurs composants (18a, 18b, 18c, 19a, 19b, 19c), comprenant les étapes consistant à :
- fournir les substances fluides aux moyens de pulvérisation (36),
- fournir un gaz sous pression à une première tuyère (16a) et une seconde tuyère (17a) pour pulvériser un premier mélange (18) et un second mélange (19) ;
- déposer et accumuler les substances fluides pulvérisées par les moyens de pulvérisation (36) sur un moyen de support (11),
- prévoir des moyens d'entraînement pour les moyens de pulvérisation (36) et le moyen de support (11) pour une distribution sensiblement uniforme des substances destinées à former la membrane (2), le procédé étant **caractérisé en ce que**, par rapport à l'étape d'approvisionnement, il comprend l'étape consistant à modifier les quantités relatives pour le mélange des composants (18a, 18b, 18c, 19a, 19b, 19c), selon les valeurs souhaitées, par rapport aux propriétés physico-chimiques requises de la membrane (2).

15. Utilisation selon la revendication 14, **caractérisée en ce que** l'étape consistant à modifier les quantités relatives pour le mélange des composants (18a, 18b, 18c, 19a, 19b, 19c) intervient de manière sensiblement instantanée selon un fonctionnement par étape.

16. Utilisation selon la revendication 14, **caractérisée en ce que** l'étape consistant à modifier les quantités relatives pour le mélange des composants (18a, 18b, 18c, 19a, 19b, 19c) intervient en continu selon un fonctionnement progressif.

17. Utilisation selon l'une quelconque des revendications 14 à 16, **caractérisée en ce que** les propriétés physico-chimiques comprennent le degré de porosité de la membrane (2).

18. Utilisation selon l'une quelconque des revendications 14 à 17, **caractérisée en ce qu'**elle comprend l'étape consistant à insérer des éléments de renforcement (45) dans la membrane (2) au cours de la formation de la membrane (2).

19. Utilisation selon l'une quelconque des revendications 14 à 17, **caractérisée en ce qu'**elle comprend l'étape consistant à chauffer une zone (48) à proximité d'un support (11) formant un élément (37) sur lequel sont déposées et s'accumulent les substances fluides pulvérisées.
